# FASCICULE DE BREVET EUROPEEN

(11) **EP 2 795 612 B1**
(45) Date de publication et mention de la délivrance du brevet: **01.02.2017**
(21) Numéro de dépôt: 12810199.5
(22) Date de dépôt: 17.12.2012
(51) Int. Cl.: G10K 11/00, B63G 8/39

(54) **MODULE ACOUSTIQUE ET ANTENNE INTEGRANT LEDIT MODULE ACOUSTIQUE**
AKUSTIKMODUL UND ANTENNE MIT DIESEM AKUSTIKMODUL
ACOUSTIC MODULE AND ANTENNA INCORPORATING SAID ACOUSTIC MODULE

(30) Priorité: 23.12.2011 FR 1104074
(43) Date de publication de la demande: 29.10.2014
(73) Titulaire: THALES, 92400 Courbevoie (FR)
(72) Inventeur: SERNIT, Eric, 06700 Saint Laurent du Var (FR)
(74) Mandataire: Collet, Alain
(86) Numéro de dépôt international: PCT/EP2012/075720
(87) Numéro de publication internationale: WO 2013/092464

(56) Documents cités:
- DE-A1-102004 037 987
- DE-A1-102008 052 354
- US-A- 3 907 062
- US-B1- 7 180 828

## Description

La présente invention concerne les antennes acoustiques de réception d'ondes sous-marines.

De telles antennes sont, par exemple, destinées à détecter et localiser des sources de bruit acoustique sous-marines. Ces antennes sont destinées à travailler dans des basses et moyennes fréquences. Par basses ou moyennes fréquences, on entend des fréquences inférieures à 12kHz. En effet, pour obtenir de bonnes performances à la fois en détection et en localisation, il est nécessaire de travailler sur un spectre de basses ou moyennes fréquences et de disposer d'une antenne dont le gain est important afin d'obtenir un rapport signal sur bruit satisfaisant (dans de nombreuses applications un gain de 20dB est nécessaire).

La présente invention concerne plus particulièrement les antennes cylindriques de sonars placés sur les sous-marins ainsi que les antennes de flanc qui sont installées sur les flancs des sous-marins.

Les antennes cylindriques de sonar sont classiquement formées d'un ensemble de colonnes d'hydrophones réalisées sous-forme de modules allongés rigides. Ces modules sont fixés sur les génératrices d'un cylindre. De façon connue, ces modules sont fixés de manière juxtaposée en étant appuyés contre un cylindre porteur qui est classiquement appelé « fût ».

Ces antennes présentent l'inconvénient d'être coûteuses. Le fait de devoir venir fixer chaque colonne d'hydrophones sur le cylindre porteur implique en effet des durées et coûts de montage importants.

Un but de l'invention est de remédier à cet inconvénient.

Le document DE 10 2004 037987 divulgue un module acoustique de réception d'ondes sous-marines réalisé sous forme d'un panneau intégrant une pluralité de conduits tubulaires recevant des hydrophones.

Par ailleurs, les antennes de flanc sont classiquement formées d'une juxtaposition de modules acoustiques réalisés sous forme de panneaux rectangulaires intégrant des senseurs acoustiques surfaciques et présentant un degré de liberté en flexion autour d'un axe transversal s'étendant selon la largeur des panneaux de façon à épouser la forme cylindrique du sous-marin.

Toutefois, ces modules ne peuvent servir pour réaliser des antennes cylindriques. En conclusion, les antennes de flanc et les antennes cylindriques sont réalisées au moyen de technologies très différentes ce qui induit des coûts de réalisation très importants.

Un autre but de l'invention est de remédier à cet inconvénient.

A cet effet, l'invention a pour objet un module acoustique pour antenne acoustique de réception d'ondes sous-marines, réalisé sous forme d'un panneau en caoutchouc à base de polychloroprène, ledit module intégrant une pluralité de conduits tubulaires longitudinaux s'étendant selon la longueur du panneau en caoutchouc et étant espacés selon la largeur du panneau en caoutchouc, lesdits conduits longitudinaux recevant des colonnes d'hydrophones espacés selon la longueur, ledit panneau en caoutchouc intégrant en outre au moins un conduit transversal s'étendant selon la largeur dudit panneau en caoutchouc, lesdits conduits longitudinaux et transversal étant garnis d'un fluide et ledit panneau acoustique étant muni de moyens pour obturer lesdits conduits de façon étanche, la dureté du caoutchouc et l'épaisseur du panneau étant choisies de façon que le module acoustique présente un premier degré de liberté en flexion autour d'un axe s'étendant dans le sens de la longueur et un deuxième degré de liberté en flexion autour d'un axe s'étendant selon la largeur.

Avantageusement, le conduit transversal croise les conduits longitudinaux.

Avantageusement, lesdits conduits sont garnis d'un liquide.

Avantageusement, le conduit transversal véhicule des câbles de connexion électrique servant à établir une liaison électrique entre des hydrophones et des éléments de connexion électrique agencés à une extrémité du conduit transversal, les éléments de connexion électrique étant destinés à coopérer avec une unité de traitement des signaux issus des hydrophones.

Avantageusement, une unité de traitement des signaux issus des hydrophones à une extrémité d'un desdits conduits.

Avantageusement, la dureté du caoutchouc, l'épaisseur du panneau et l'agencement des conduits sont choisis de façon que le panneau acoustique puisse être courbé avec un premier rayon de courbure minimum compris entre 1 m et 2, 5 m autour d'un axe s'étendant selon la longueur dudit panneau et avec un deuxième rayon de courbure minimum compris entre 1 m et 2, 5 m autour d'un axe s'étendant selon la largeur du panneau.

Avantageusement, le caoutchouc présente une dureté Shore comprise entre 60 et 80 Shores A.

Avantageusement, le panneau présente une épaisseur comprise 5 cm et 15 cm.

L'invention a également pour objet une antenne acoustique de réception d'ondes sous-marines pour sonar passif comprenant un ensemble de modules acoustiques selon l'invention.

Dans un mode de réalisation, l'antenne est tubulaire. Avantageusement, l'antenne est tronconique.

Avantageusement, l'antenne comprend un fût et les modules acoustiques sont en appui contre ledit fût.

En variante, l'antenne comprend une couronne inférieure et une couronne supérieure coaxiales, et dans laquelle les modules acoustiques sont fixés aux couronnes inférieure et supérieure et sont agencés de façon à former, entre les deux couronnes, un fût autoporteur de forme tubulaire, les panneaux s'étendant dans le sens de la longueur entre la couronne inférieure et la couronne supérieure.

L'antenne tubulaire peut être cylindrique.

Dans cette variante, les modules acoustiques sont avantageusement agencés de façon que les colonnes d'hydrophones s'étendent selon des génératrices respectives d'un unique cylindre.

Dans un autre mode de réalisation, les modules acoustiques sont fixés sur la partie avant de la coque d'un sous-marin.

Avantageusement, les modules acoustiques obturent une bouche formée dans la partie avant de la coque d'un sous-marin.

L'invention a également pour objet une antenne acoustique de réception d'ondes sous-marines, comprenant une succession de modules acoustiques selon l'invention, les modules étant montés en appui contre une coque d'un sous-marin, lesdits modules acoustiques étant agencés de façon à s'étendre selon leur largeur sensiblement parallèlement à l'axe du sous-marin.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement un module acoustique selon l'invention,
- la figure 2 représente schématiquement une coupe selon un plan M d'une portion d'un module acoustique selon l'invention,
- la figure 3 représente schématiquement en perspective la portion supérieure droite du module acoustique des figures 1 et 2,
- la figure 4, représente schématiquement une coupe transversale d'une antenne cylindrique pour sonar passif selon un premier mode de réalisation de l'invention,
- la figure 5 représente schématiquement, en perspective, un deuxième mode de réalisation d'une antenne cylindrique pour sonar passif selon l'invention,
- la figure 6 représente une antenne de flanc selon l'invention,
- la figure 7A représente schématiquement une colonne d'hydrophones s'étendant selon un axe correspondant à l'axe des hydrophones qu'elle comprend, la figure 7B représente schématiquement en détails, le contenu de la bulle représentée sur la figure 7A,
- la figure 8 représente un sous-marin selon l'invention.

D'une figure à l'autre, les mêmes éléments sont repérés par les mêmes références.

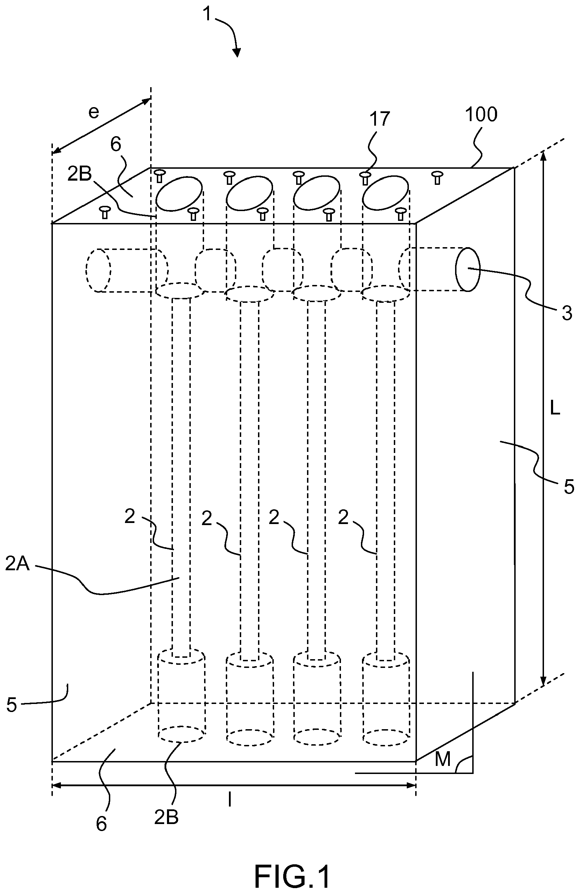

Sur la figure 1, on a représenté un module acoustique 1 pour antenne de réception d'ondes sous-marines selon l'invention. Ce module acoustique 1 se présente sous forme d'un panneau en caoutchouc 100 à base de polychloroprène qui intègre un certains nombres d'éléments.

Le panneau 100 se présente sous la forme d'un panneau souple comme nous le verrons par la suite.

Il présente globalement la forme d'un parallélépipède rectangle de faible épaisseur e. Par parallélépipède de faible épaisseur on entend un parallélépipède dont l'épaisseur est au moins 3 fois inférieure à la largeur notée l du panneau. Le panneau 100 présente également une longueur notée L.

Typiquement les panneaux 100 présentent une longueur L comprise entre 1 m et 2 m. Ils présentent une largeur l comprise entre 40 cm et 1, 60 m. La largeur est bien entendue toujours inférieure à la longueur.

On considère dans la suite du texte que, dans le cas où le panneau présente une faible épaisseur e, il présente une forme globalement rectangulaire.

Le panneau en caoutchouc 100 intègre une pluralité de conduits longitudinaux 2 s'étendant selon de la longueur L du panneau 100. Autrement dit, les conduits longitudinaux 2 s'étendent dans le sens de la longueur c'est-à-dire selon la direction de la longueur L du panneau 100.

Les conduits longitudinaux sont espacés d'un pas pL de l'ordre de 9 cm. Le pas pL peut varier, il est défini par le besoin acoustique (échantillonnage spécial lié à la bande de fréquence souhaitée pour le panneau).

Ces conduits 2 débouchent de part et d'autre du panneau en caoutchouc. Ils débouchent plus particulièrement sur les petits bords 6 du panneau qui s'étendent dans le sens de la largeur l du panneau.

Les conduits longitudinaux 2 sont espacés dans le sens de la largeur l du panneau.

Le panneau en caoutchouc intègre en outre un conduit transversal 3 s'étendant dans le sens de la largeur l du panneau. Cette caractéristique présente l'avantage conférer de la souplesse au panneau dans un mouvement de flexion autour d'un axe s'étendant dans le sens de la longueur L du panneau 100.

En variante, le panneau intègre une pluralité de conduits transversaux 3. Cela permet de conférer plus de souplesse au panneau.

Ce conduit 3 débouche de part et d'autre du panneau en caoutchouc. Il débouche plus particulièrement sur les grands bords 5 du panneau qui s'étendent dans la direction de la longueur du panneau.

Les conduits longitudinaux 2 et transversal 3 sont des cavités formées au sein du panneau en caoutchouc 100.

Ces conduits 2, 3 présentent une forme tubulaire.

Sur l'exemple représenté sur la figure 1, les conduits longitudinaux 2 présentent une forme évasée à chacune de leurs extrémités. Cette caractéristique permet d'intégrer, si besoin, des moyens de traitement des signaux issus des hydrophones dans les conduits longitudinaux.

En particulier, ils présentent une partie centrale tubulaire 2A présentant un premier diamètre et deux extrémités tubulaires 2B présentant un deuxième diamètre supérieur au premier diamètre. Le premier diamètre est compris entre 3 cm et 5 cm et le deuxième diamètre est compris entre 5 cm et 8 cm.

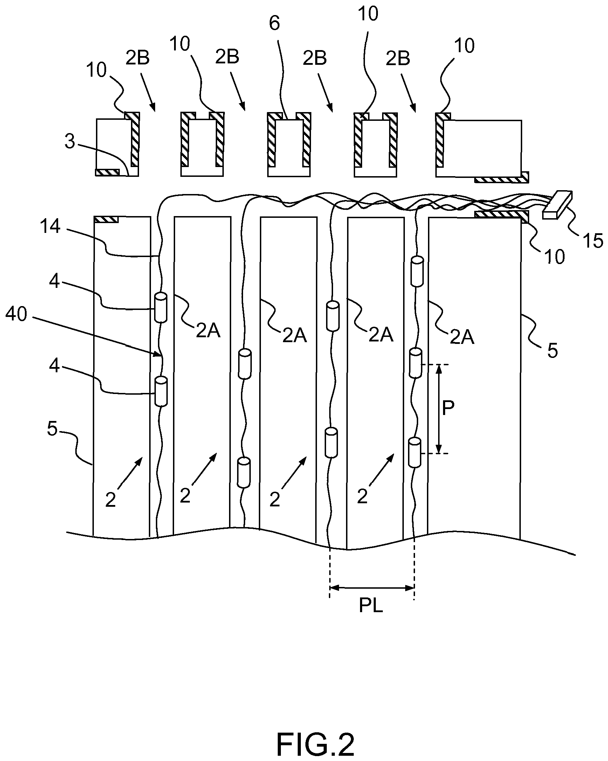

Comme visible sur la figure 2 représentant une coupe du panneau des figures 1 et 2 selon un plan M défini par les directions de la longueur et de la largeur du panneau acoustique 1, chaque conduit longitudinal 2 reçoit des colonnes 40 d'hydrophones 4 espacés dans le sens de la longueur L. Ces hydrophones 4 ne sont pas représentés sur la figure 1 pour des raisons de clarté.

Les hydrophones intégrés dans les conduits longitudinaux 2 forment des colonnes d'hydrophones 40 présentant des axes respectifs correspondant aux axes des hydrophones qui la forment. Ces axes sont parallèles aux axes des conduits longitudinaux et de préférence confondus avec les axes conduits longitudinaux dans lesquels les colonnes sont respectivement intégrées.

Sur la réalisation des figures 1 à 3, les hydrophones 4 sont reçus dans la partie centrale 2A des conduits longitudinaux 2.

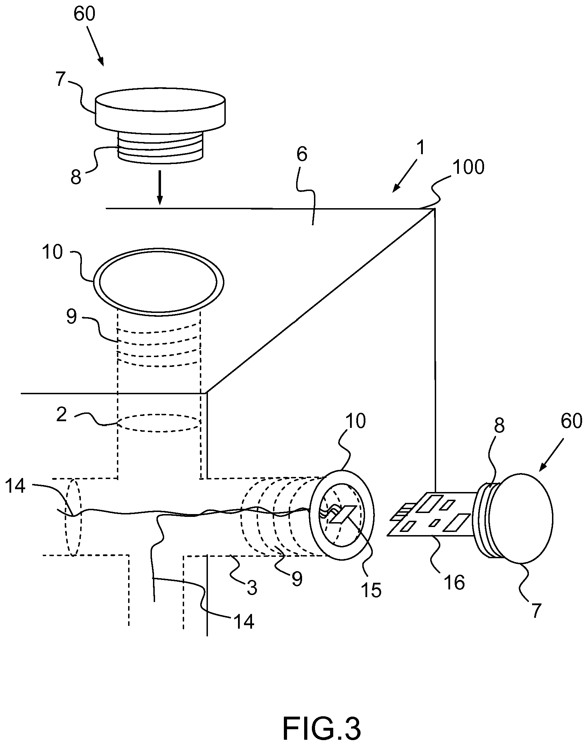

Comme visible sur les figures 2 et 3, le conduit transversal 3 reçoit ou véhicule avantageusement des câbles de connexion électrique 14 (non représentés sur la figure 1 pour plus de clarté).

Les câbles de connexion électrique 14 servent à établir une liaison électrique entre des hydrophones 4 et des éléments de connexion électrique 15 (ou sorties électriques) agencé(e)s à une ou plusieurs extrémité(s) du conduit transversal 3. Les éléments de connexion électrique 15 sont destinés à coopérer avec une unité de traitement 16 des signaux issus des hydrophones. Avantageusement une unité de traitement 16 est intégrée dans le conduit transversal 3 comme nous le verrons en référence à la figure 3. Cette caractéristique permet de traiter les signaux issus des hydrophones (par exemple les amplifier pour assurer une bonne transmission de ces signaux vers des moyens de traitement déportés à l'extérieur du module 1 et éventuellement concentrer les signaux amplifiés, les numériser et les multiplexer pour assurer une bonne transmission de ces signaux vers des moyens de traitement déportés) directement au niveau du module 1.

Dans un mode de réalisation non représenté sur les figures de la demande de brevet, des câbles de connexion électrique 14 sont véhiculés jusqu'à une sortie électrique 15 agencée à une extrémité d'un conduit longitudinal 2. Cette sortie électrique 15 peut être reliée à des moyens de traitement des signaux issus des hydrophones qui peuvent être intégré ou non dans le module 1 ou bien être connectée à un autre module acoustique 1 de façon à relier plusieurs panneaux entre eux.

Le conduit transversal 3 croise avantageusement les conduits longitudinaux 2. Cette caractéristique présente l'avantage conférer de la souplesse au panneau dans un mouvement de flexion autour d'un axe s'étendant dans le sens de la longueur du module 1.

Les conduits 2, 3 sont garnis d'un liquide non représenté. Ce liquide peut être visqueux.

L'utilisation d'un liquide (fluide ou visqueux) permet au panneau acoustique 1 de résister à la pression hydrostatique et protège les hydrophones 4 et les câbles de connexion électrique de l'humidité. Ce choix de conception facilite la maintenance et préserve la capacité d'évolution des performances du module (augmenter le nombre d'hydrophones ou intégrer de nouveaux moyens de traitement des signaux provenant des hydrophones dans des conduits 2 ou 3.)

Comme visible sur la figure 3 représentant schématiquement en perspective la portion supérieure droite du panneau acoustique des figures 1 et 2, le panneau est muni de moyens pour obturer les conduits transversal 3 et longitudinaux 2. Ces moyens sont agencés à chaque extrémité des conduits 2, 3.

Sur la réalisation non limitative de la figure 3, les moyens d'obturation 60 sont des moyens d'obturation amovibles. Plus particulièrement, ce sont des bouchons 7 munis d'un filetage 8 et les conduits sont munis d'un taraudage 9 complémentaire du filetage. Plus particulièrement, sur l'exemple représenté, les conduits sont munis d'inserts en plastique 10 munis du taraudage 9.

Avantageusement, au moins un des bouchons 7 utilisé pour obturer le conduit transversal 3 est muni d'une unité de traitement de signaux issus des hydrophones 4. Au moins un conduit longitudinal 2 peut aussi être muni d'une unité de traitement de signaux issus des hydrophones.

Ladureté du caoutchouc et l'épaisseur e du panneau 100 sont définies de façon que le module acoustique 1 présente un premier degré de liberté en rotation autour d'un axe s'étendant selon la longueur L du panneau 100 et un deuxième degré de liberté en rotation autour d'un axe s'étendant selon la largeur l du panneau 100. Autrement dit, le module acoustique 1 présente des degrés de liberté en flexion autour de ces deux axes.

La détermination de ces paramètres ne pose pas de problèmes à l'homme du métier. Elle peut être réalisée facilement, par exemple, en faisant des essais. L'agencement des conduits longitudinaux et transversal participent à la flexibilité du module 1, chacun dans un sens.

Avantageusement, la dureté du caoutchouc, l'épaisseur du panneau 100 et l'agencement des conduits 2, 3 sont choisis de façon que le panneau acoustique puisse être courbé avec un premier rayon de courbure minimum compris entre 1 m et 2, 5 m autour d'un axe s'étendant selon la longueur L dudit panneau 100 et avec un deuxième rayon de courbure minimum compris entre 1 m et 2, 5 m autour d'un axe s'étendant selon la largeur l dudit module 100.

On utilise typiquement un caoutchouc à base de polychloroprène présentant une dureté Shore comprise entre 60 et 80 Shores A. La dureté est typiquement égale à environ 70 Shores A. La dureté Shore est ici la dureté mesurée à l'aide d'un duromètre de type A.

Les panneaux 100 présentent une épaisseur comprise 5 cm et 15 cm.

La présence du conduit transversal favorise la flexion du panneau autour de l'axe s'étendant selon la longueur du panneau.

On peut prévoir une pluralité de conduits transversaux 3 espacés selon la longueur du panneau 100 pour favoriser la flexion autour de cet axe.

De fait du premier degré de liberté en rotation autour d'un axe s'étendant selon la longueur L, il est possible de courber le module acoustique 1 selon l'invention de façon que les colonnes d'hydrophones qu'il intègre soient placées sur une génératrice d'un unique cylindre.

On peut ainsi réaliser une antenne cylindrique en juxtaposant plusieurs panneaux cylindriques selon l'invention. Ces panneaux permettent en outre, en intégrant plusieurs colonnes d'hydrophones, de réaliser des économies en termes de montage des antennes acoustiques à la fois au niveau de la durée du montage et du nombre d'éléments nécessaires au montage.

Par ailleurs, l'utilisation de ces modules acoustiques pour réaliser des antennes cylindriques n'entraîne pas de coûts supplémentaires en termes de traitement du signal puisque leur degré de liberté en flexion permet de disposer les colonnes d'hydrophones sur les génératrices d'un unique cylindre.

Ces modules peuvent aussi être disposés sur des supports plans.

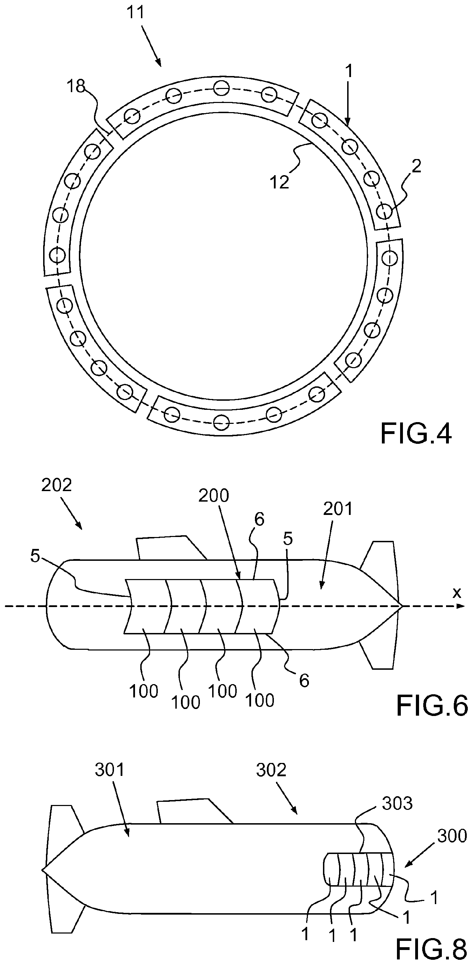

Sur la figure 4, on a représenté une coupe transversale d'une antenne cylindrique 11 pour sonar passif selon un premier mode de réalisation de l'invention.

Cette antenne 11 comprend un fût cylindrique 12 ou épontille et un ensemble de panneaux acoustique 1 selon l'invention. Ces modules acoustiques 1 sont en appui contre le fût 12. Les modules 1 sont agencés de façon que les colonnes d'hydrophones 40 qu'ils intègrent soient positionnées parallèlement à l'axe du fût.

Avantageusement, les modules 1 sont agencés de façon que les colonnes d'hydrophones 40 qu'ils intègrent s'étendent selon des axes respectifs confondus avec des génératrices d'un unique cylindre 18. Autrement dit, les colonnes d'hydrophones 40 s'étendent selon des génératrices d'un unique cylindre 18. La coupe d'un tel cylindre est représentée en traits pointillés sur la figure 4.

Autrement dit, les modules acoustiques 1 sont disposés de façon à former un cylindre.

Cette caractéristique est très avantageuse en termes de coût de traitement des signaux issus des hydrophones.

Les modules acoustiques 1 sont maintenus en appui contre le fût 12 par des moyens classiques qui ne sont pas l'objet de l'invention et que l'homme du métier sait facilement trouver. On peut, par exemple, utiliser des liens souples faisant office de brides de serrage et agencés de façon que les modules acoustiques 1 soient pris en sandwich entre les brides de serrage et le fût 12.

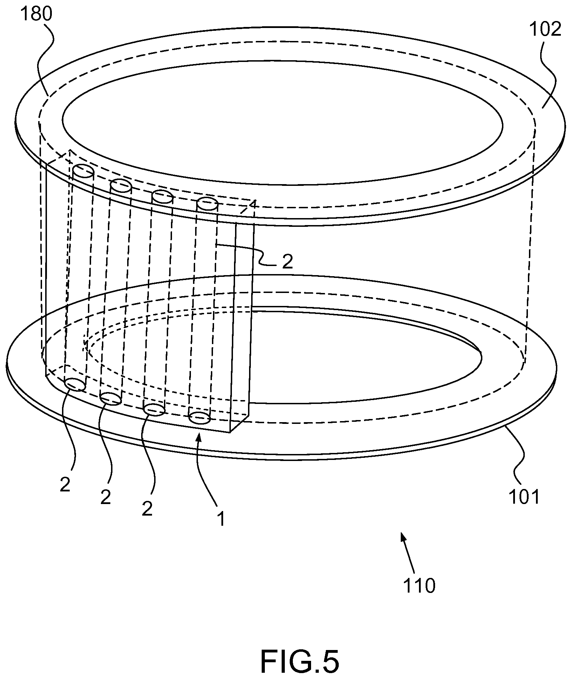

Sur la figure 5, on a représenté schématiquement en perspective, un deuxième mode de réalisation d'une antenne cylindrique 110 pour sonar passif selon l'invention.

L'antenne cylindrique 110 est dépourvue de fût tel que représenté sur la figure 4. Cette antenne comprend une couronne inférieure 101 et une couronne supérieure 102 coaxiales. Ces couronnes présentent des formes identiques. L'antenne cylindrique selon le premier mode de réalisation comprend également avantageusement ces couronnes.

L'antenne 110 comprend en outre des modules acoustiques 1 selon l'invention dont un seul est représenté sur la figure 1. Les modules acoustiques 1 sont fixés auxdites couronnes 101, 102. Les moyens de fixation utilisés ne sont pas représentés mais on utilise des moyens de fixation classiques pour l'homme du métier comme, par exemple, des vis.

Comme visible sur la figure 1, modules 1 comprennent avantageusement des inserts 17 en plastiques thermoformés (ou métalliques) permettant de faciliter leur montage sur des structures rigides telles que des couronnes. Sur la figure 1, on a représenté uniquement des inserts faisant saillie sur un petit bord 6 du panneau 100 mais on prévoit avantageusement des inserts faisant saillie sur le petit bord opposé ainsi que sur les grands bords 5 du panneau. Autrement dit, on prévoit des inserts faisant saillie sur l'épaisseur du panneau 100.

Les modules acoustiques 1 sont agencés pour former, entre les deux couronnes 101, 102, un fût autoporteur de forme tubulaire, les modules s'étendant dans le sens de la longueur L entre la couronne inférieure 101 et la couronne supérieure 102.

Avantageusement, les modules acoustiques 1 sont agencés de façon que les colonnes d'hydrophones 40 qu'ils intègrent s'étendent selon des axes respectifs confondus avec les génératrices d'un unique cylindre 180 représenté en traits pointillés. Autrement dit, les panneaux acoustiques sont disposés de façon à former un fût cylindrique.

Typiquement, les antennes cylindriques présentent un rayon compris entre 1 m et 2, 5 m. Il s'agit du rayon du cylindre sur les génératrices duquel sont positionnées les colonnes d'hydrophone 40.

Comme nous l'avons vu précédemment, la dureté du caoutchouc, l'épaisseur et l'agencement des conduits transversaux sont choisis de façon que le panneau acoustique puisse être courbé avec un premier rayon de courbure minimum compris entre 1 m et 2, 5 m autour d'un axe s'étendant selon la longueur L dudit panneau 1. De cette façon le panneau peut servir pour réaliser des antennes cylindriques de rayons différents pourvu qu'ils soient au moins égaux au premier rayon de courbure minimum.

La présence du premier degré de flexion permet également de réaliser des antennes tubulaires non cylindriques c'est-à-dire à base non circulaire dont les génératrices sont parallèles à un axe s'étendant selon la longueur L du panneau 1. Ces antennes sont obtenues en disposant les modules 1 contre un fût tubulaire ou bien entre deux couronnes tout comme les antennes tubulaires. Les modules 1 sont disposés de façon que les colonnes 40 s'étendent selon lesdites génératrices.

Le deuxième degré de liberté en rotation autour d'un axe s'étendant dans le sens de la largeur l du module 1 permet d'utiliser les panneaux acoustiques pour réaliser des antennes acoustiques de réception d'ondes sous-marines de flanc. Par antennes de flanc, on entend des antennes installées sur les flancs des sous-marins.

Cette caractéristique est très avantageuse en termes de coût car elle permet de prévoir un unique module acoustique 1 pour réaliser des antennes cylindriques et des antennes de flanc.

On a représenté sur la figure 6 une antenne de flanc 200 selon l'invention.

Cette antenne 200 comprend une succession de modules acoustiques 1 selon l'invention qui sont montés en appui contre la coque 201 d'un sous-marin 202. Les panneaux acoustiques 1 sont plus particulièrement montés sur un flanc du sous-marin 202.

Les longs bords 5 de deux panneaux 1 adjacents se font face ou sont avantageusement accolés comme représenté sur la figure 6.

Les modules acoustiques 1 sont installés de façon à s'étendre selon leur largeur l sensiblement parallèlement à l'axe x du sous-marin.

La paroi 201 du sous-marin 202 est alors bombée entre les deux petits bords 6 de chacun des modules 1 ce qui nécessite un degré de liberté en flexion de ces panneaux 1 autour d'un axe s'étendant selon leur largeur.

Les modules 1 sont montés sur la paroi 201 du sous-marin au moyen de moyens de montage classiques comme l'homme du métier tels que des brides de montage disposées de façon à s'étendre selon la longueur L des panneaux et de façon que les modules 1 soient pris en sandwich entre les brides et la paroi du sous-marin. On peut prévoir des conduits s'étendant selon l'épaisseur des panneaux et recevant des inserts traversant le panneau de part et d'autre suivant son épaisseur. La liaison entre les modules 1 et la paroi 201 est avantageusement établie au moyen de goujons passant dans les inserts.

Les mêmes moyens de montage peuvent être utilisés pour les antennes tubulaires présentées précédemment et les antennes présentées par la suite.

Du fait du deuxième degré de liberté en flexion, les modules 1 peuvent être installés sur des sous-marins présentant des rayons de courbure différents pourvu qu'ils présentent des rayons de courbure au moins égal au deuxième rayon de courbure minimum.

Par ailleurs, du fait des deux degrés de liberté en flexion, les modules 1 peuvent être installés sur des sous-marins présentant des rayons variables.

Ces degrés de liberté permettent également de réaliser des antennes tubulaires tronconiques à base circulaire ou non au moyen de ces modules. Dans les antennes tronconiques à base circulaire, les génératrices sont disposées sur un cône. Ces antennes sont obtenues en disposant les modules 1 sur un fût tronconique ou bien entre deux couronnes tout comme les antennes tubulaires. Les modules 1 sont disposés de façon que les colonnes 40 s'étendent selon lesdites génératrices.

Par ailleurs, comme représenté sur la figure 8, les sous-marins 302 comprennent classiquement une coque 301 comprenant une bouche 303 dans la partie avant du sous-marin. La bouche 303 est une cavité débouchant en partie avant du sous-marin 302.

Les antennes pour sonars passifs sont classiquement disposées dans la bouche 303 du sous-marin. Un carénage est ensuite rapporté sur la coque du sous-marin et ce carénage obture la bouche 3 et confère une forme hydrodynamique au sous-marin. La figure 3 représente un sous-marin équipé d'une antenne 300 formée par une juxtaposition de modules 1 selon l'invention qui obturent la bouche 303. Les modules 1 font partie du carénage permettant de donner une forme hydrodynamique au sous-marin. Ce mode de réalisation permet d'utiliser l'espace conféré par la bouche à d'autres fins. Il peut être obtenu grâce à la présence des deux degrés de liberté en flexion qui permettent de faire adopter aux modules 1 des formes complexes.

L'invention a également pour objet une antenne pour sonar passif dans laquelle les modules acoustiques sont fixés sur la partie avant de la coque du sous-marin. Du fait que l'on peut faire adopter aux modules 1 des formes complexes, il n'est plus nécessaire de réaliser des bouches dans les sous-marin ce qui conduit à réduire notablement les coûts de réalisation des sous-marin.

Dans ces deux derniers cas, la géométrie du panneau est alors optimisée pour permettre la courbure d'installation, ce qui nécessite de la souplesse en flexion, tout en présentant une raideur suffisante pour résister aux conditions de navigation (pression à l'avancement du sous-marin, vague d'étrave, paquet de mer, ...).

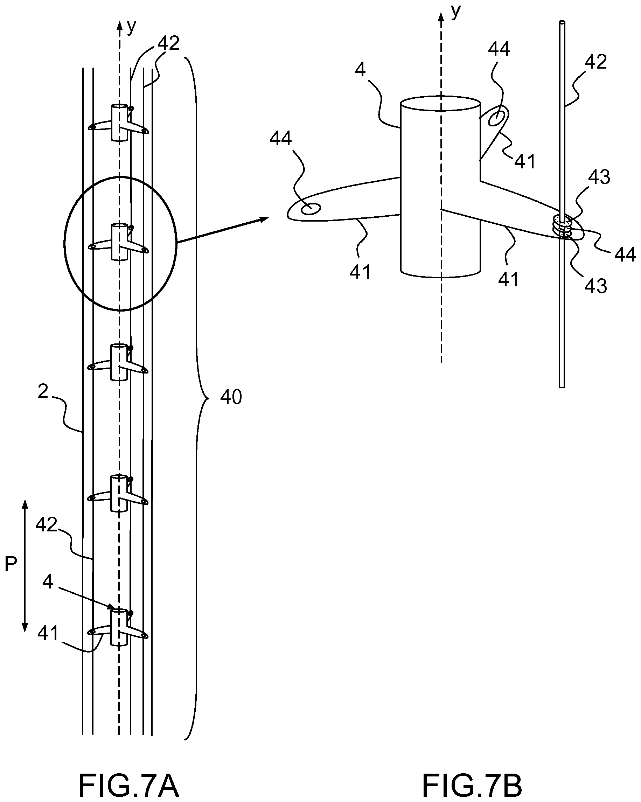

Sur la figure 7A, on a représenté une colonne d'hydrophones 40 s'étendant selon un axe y correspondant à l'axe des hydrophones 4 qu'elle comprend. Sur la figure 7B, on a représenté un zoom du contenu de la bulle représentée sur la figure 7A.

Les hydrophones 4 sont montés dans des conduits longitudinaux de façon à former des colonnes d'hydrophones 40 s'étendant selon l'axe y des hydrophones qui la forment. Ils sont montés par des moyens de montage classique selon l'homme du métier. Sur l'exemple représenté sur les figures 7A, 7B, les hydrophones sont munis d'ailettes de positionnement 41 munies d'orifices 44 dans lesquels sont enfilées des tiges rigides 42. Les hydrophones 4 sont fixés aux tiges 42 au moyen de moyens de fixation 43 de façon à êtes espacés d'un pas P selon l'axe y.

## Revendications

1. Module acoustique (1) pour antenne acoustique de réception d'ondes sous-marines, réalisé sous forme d'un panneau (100) intégrant une pluralité de conduits tubulaires recevant des hydrophones, **caractérisé en ce que** le panneau est un panneau en caoutchouc à base de polychloroprène, les conduits tubulaires étant des conduits tubulaires longitudinaux (2) s'étendant selon la longueur (L) du panneau (100) et étant espacés selon la largeur (l) du panneau (100), lesdits conduits longitudinaux (2) recevant des colonnes (40) d'hydrophones (4) espacés selon la longueur (L), ledit panneau en caoutchouc (100) intégrant en outre au moins un conduit transversal (3) s'étendant selon la largeur (l) dudit panneau en caoutchouc (100), lesdits conduits longitudinaux (2) et transversal (3) étant garnis d'un fluide et ledit panneau acoustique (1) étant muni de moyens (6) pour obturer lesdits conduits (2, 3) de façon étanche, la dureté du caoutchouc et l'épaisseur (e) du panneau (100) étant choisies de façon que le module acoustique (1) présente un premier degré de liberté en flexion autour d'un axe s'étendant dans le sens de la longueur (L) et un deuxième degré de liberté en flexion autour d'un axe s'étendant selon la largeur (l).

2. Module acoustique (1) selon la revendication précédente, dans lequel le conduit transversal (3) croise les conduits longitudinaux (2).

3. Module acoustique (1) selon l'une quelconque des revendications précédentes, dans lequel lesdits conduits (2, 3) sont garnis d'un liquide.

4. Module acoustique (1) selon l'une quelconque des revendications précédentes, dans lequel le conduit transversal (3) véhicule des câbles de connexion électrique (14) servant à établir une liaison électrique entre des hydrophones (4) et des éléments de connexion électrique (15) agencés à une extrémité du conduit transversal (3), les éléments de connexion électrique (15) étant destinés à coopérer avec une unité de traitement (16) des signaux issus des hydrophones (4).

5. Module acoustique (1) selon l'une quelconque des revendications précédentes, intégrant une unité de traitement (16) des signaux issus des hydrophones (4) à une extrémité d'un desdits conduits (2, 3).

6. Module acoustique (1) selon l'une quelconque des revendications précédentes, dans lequel la dureté du caoutchouc, l'épaisseur du panneau (100) et l'agencement des conduits (2, 3) sont choisis de façon que le panneau acoustique puisse être courbé avec un premier rayon de courbure minimum compris entre 1 m et 2, 5 m autour d'un axe s'étendant selon la longueur dudit panneau (100) et avec un deuxième rayon de courbure minimum compris entre 1 m et 2, 5 m autour d'un axe s'étendant selon la largeur du panneau (100).

7. Module acoustique (1) selon l'une quelconque des revendications précédentes, dans lequel le caoutchouc présente une dureté Shore comprise entre 60 et 80 Shores A.

8. Module acoustique (1) selon l'une quelconque des revendications précédentes, dans lequel le panneau (100) présente une épaisseur comprise 5 cm et 15 cm.

9. Antenne acoustique de réception d'ondes sous-marines pour sonar passif comprenant un ensemble de modules acoustiques (1) selon l'une quelconque des revendications précédentes.

10. Antenne acoustique selon la revendication précédente, ladite antenne étant tubulaire.

11. Antenne acoustique selon la revendication précédente, ladite antenne étant tronconique.

12. Antenne acoustique selon l'une quelconque des revendications 10 à 12, comprenant un fût (12) et dans lequel les modules acoustiques (1) sont en appui contre ledit fût (12).

13. Antenne acoustique selon l'une quelconque des revendications 10 à 12, comprenant une couronne inférieure (101) et une couronne supérieure (102) coaxiales, et dans laquelle les modules acoustiques (1) sont fixés aux couronnes inférieure (101) et supérieure (102) et sont agencés de façon à former, entre les deux couronnes (101, 102), un fût autoporteur de forme tubulaire, les panneaux s'étendant dans le sens de la longueur (L) entre la couronne inférieure (101) et la couronne supérieure (102).

14. Antenne acoustique selon l'une quelconque des revendications 10 à 13, ladite antenne étant cylindrique.

15. Antenne acoustique selon la revendication 14, dans laquelle les modules acoustiques (1) sont agencés de façon que les colonnes d'hydrophones (40) s'étendent selon des génératrices respectives d'un unique cylindre (18, 180).

16. Antenne acoustique selon la revendication 9, dans laquelle les modules acoustiques (1) sont fixés sur la partie avant de la coque d'un sous-marin.

17. Antenne acoustique selon la revendication 9, dans laquelle les modules acoustiques (1) obturent une bouche (300) formée dans la partie avant de la coque (302) d'un sous-marin.

18. Antenne acoustique (200) de réception d'ondes sous-marines, **caractérisée en ce qu'**elle comprend une succession de modules acoustiques (1) selon l'une quelconque des revendications 1 à 8, montés en appui contre une coque (201) d'un sous-marin (202), lesdits modules acoustiques (1) étant agencés de façon à s'étendre selon leur largeur sensiblement parallèlement à l'axe (x) du sous-marin (202).

## Patentansprüche

1. Akustikmodul (1) für eine akustische Antenne zum Empfangen von Unterwasserwellen, umgesetzt in Form einer Platte (100), die eine Vielzahl Rohrleitungen integriert, die Hydrophone aufnehmen, **dadurch gekennzeichnet, dass** die Platte eine Gummiplatte auf der Basis von Polychloropren ist, wobei die Rohrleitungen längliche Rohrleitungen (2) sind, die sich gemäß der Länge (L) der Platte (100) erstrecken und gemäß der Breite (1) der Platte (100) beabstandet sind, wobei die länglichen Leitungen (2) Säulen (40) mit Hydrophonen (4) aufnehmen, die gemäß der Länge (L) beabstandet sind, wobei die Gummiplatte (100) ferner mindestens eine transversale Leitung (3) integriert, die sich gemäß der Breite (1) der Gummiplatte (100) erstreckt, wobei die länglichen (2) und transversalen (3) Leitungen mit einem Fluid gefüllt sind und die Akustikplatte (1) mit Mitteln (6) zum dichten Verschließen der Leitungen (2, 3) ausgestattet ist, wobei die Härte des Gummis und die Dicke (e) der Platte (100) derart ausgewählt sind, dass das Akustikmodul (1) einen ersten Biege-Freiheitsgrad um eine Achse aufweist, die sich in der Richtung der Länge (L) erstreckt, und einen zweiten Biege-Freiheitsgrad um eine Achse, die sich gemäß der Breite (1) erstreckt.

2. Akustikmodul (1) nach vorangehendem Anspruch, wobei die transversale Leitung (3) die länglichen Leitungen (2) kreuzt.

3. Akustikmodul (1) nach einem der vorangehenden Ansprüche, wobei die Leitungen (2, 3) mit einer Flüssigkeit gefüllt sind.

4. Akustikmodul (1) nach einem der vorangehenden Ansprüche, wobei die transversale Leitung (3) elektrische Verbindungskabel (14) befördert, die zur Herstellung einer elektrischen Verbindung zwischen Hydrophonen (4) und elektrischen Anschlusselementen (15) dient, die an einem Ende der transversalen Leitung (3) ausgebildet sind, wobei die elektrischen Anschlusselemente (15) bestimmt sind, mit einer Einheit (16) zum Verarbeiten der Signale zusammenzuwirken, die von den Hydrophonen (4) ausgegeben werden.

5. Akustikmodul (1) nach einem der vorangehenden Ansprüche, das eine Einheit (16) zum Verarbeiten der Signale, die von den Hydrophonen (4) ausgegeben werden, an einem Ende der Leitungen (2, 3) integriert.

6. Akustikmodul (1) nach einem der vorangehenden Ansprüche, wobei die Härte des Gummis, die Dicke der Platte (100) und die Anordnung der Leitungen (2, 3) derart ausgewählt sind, dass die Akustikplatte mit einem ersten minimalen Krümmungsradius zwischen 1 m und 2,5 m um eine Achse, die sich gemäß der Länge der Platte (100) erstreckt, und mit einem zweiten minimalen Krümmungsradius zwischen 1 m und 2,5 m um eine Achse, die sich gemäß der Breite der Platte (100) erstreckt, gekrümmt sein kann.

7. Akustikmodul (1) nach einem der vorangehenden Ansprüche, wobei der Gummi eine Shore-Härte zwischen 60 und 80 Shores A aufweist.

8. Akustikmodul (1) nach einem der vorangehenden Ansprüche, wobei die Platte (100) eine Dicke zwischen 5 cm und 15 cm aufweist.

9. Akustische Antenne zum Empfangen von Unterwasserwellen für passives Sonar, umfassend eine Einheit von Akustikmodulen (1) nach einem der vorangehenden Ansprüche.

10. Akustikantenne nach vorangehendem Anspruch, wobei die Antenne rohrförmig ist.

11. Akustikantenne nach vorangehendem Anspruch, wobei die Antenne kegelstumpfförmig ist.

12. Akustikantenne nach einem der Ansprüche 10 bis 12, umfassend einen Pfosten (12) und wobei die Akustikmodule (1) an dem Pfosten (12) anliegen.

13. Akustikantenne nach einem der Ansprüche 10 bis 12, umfassend einen unteren Kranz (101) und einen oberen Kranz (102), die koaxial sind, und wobei die Akustikmodule (1) am unteren Kranz (101) und oberen Kranz (102) befestigt sind und derart ausgebildet sind, dass zwischen den beiden Kränzen (101, 102) ein selbsttragender rohrförmiger Pfosten gebildet ist, wobei sich die Platten zwischen dem unteren Kranz (101) und dem oberen Kranz (102) in Richtung der Länge (L) erstrecken.

14. Akustikantenne nach einem der Ansprüche 10 bis 13, wobei die Antenne zylindrisch ist.

15. Akustikantenne nach Anspruch 14, wobei die Akustikmodule (1) derart ausgebildet sind, dass sich die Säulen der Hydrophone (40) gemäß jeweiligen Mantellinien eines einzigen Zylinders (18, 180) erstrecken.

16. Akustikantenne nach Anspruch 9, wobei die Akustikmodule (1) auf dem vorderen Teil des Rumpfs eines U-Boots befestigt sind.

17. Akustikantenne nach Anspruch 9, wobei die Akustikmodule (1) eine Mündung (300) verschließen, die im vorderen Teil des Rumpfs (302) eines U-Boots ausgebildet ist.

18. Akustische Antenne (200) zum Empfangen von Unterwasserwellen, **dadurch gekennzeichnet, dass** sie eine Abfolge von Akustikmodulen (1) nach einem der Ansprüche 1 bis 8 umfasst, die in Abstützung auf einem Rumpf (201) eines U-Boots (202) montiert sind, wobei die Akustikmodule (1) derart ausgebildet sind, dass sie sich gemäß ihrer Breite etwa parallel zur Achse (x) des U-Boots (202) erstrecken.

## Claims

1. An acoustic module (1) for an acoustic antenna for receiving submarine waves, produced in the form of a panel (100) integrating a plurality of tubular conduits receiving hydrophones, **characterised in that** said panel is a polychloroprene-based rubber panel, said tubular conduits being longitudinal tubular conduits (2) extending along the length (L) of said panel (100) and being spaced apart along the width (1) of said panel (100), said longitudinal conduits (2) receiving columns (40) of hydrophones (4) spaced apart along the length (L), said rubber panel (100) further integrating at least one transverse conduit (3) extending along the width (1) of said rubber panel (100), said longitudinal (2) and transverse (3) conduits being filled with a fluid and said acoustic panel (1) being provided with means (6) for blanking-off said conduits (2, 3) in a sealed manner, the hardness of the rubber and the thickness (e) of said panel (100) being selected so that said acoustic module (1) has a first degree of bending freedom about an axis extending along the length (L) and a second degree of bending freedom about an axis extending along the width (1).

2. The acoustic module (1) according to the preceding claim, wherein said transverse conduit (3) intersects said longitudinal conduits (2).

3. The acoustic module (1) according to any one of the preceding claims, wherein said conduits (2, 3) are filled with a liquid.

4. The acoustic module (1) according to any one of the preceding claims, wherein said transverse conduit (3) conveys electrical connection cables (14) for establishing an electrical connection between hydrophones (4) and electrical connection elements (15) arranged at one end of said transverse conduit (3), said electrical connection elements (15) being intended to cooperate with a unit (16) for processing signals originating from said hydrophones (4).

5. The acoustic module (1) according to any one of the preceding claims, integrating a unit (16) for processing said signals originating from said hydrophones (4) at one end of one of said conduits (2, 3).

6. The acoustic module (1) according to any one of the preceding claims, wherein the hardness of the rubber, the thickness of said panel (100) and the arrangement of said conduits (2, 3) are selected so that said acoustic panel can be curved with a first minimum radius of curvature between 1 m and 2.5 m about an axis extending along the length of said panel (100) and with a second minimum radius of curvature between 1 m and 2.5 m about an axis extending along the width of said panel (100).

7. The acoustic module (1) according to any one of the preceding claims, wherein the rubber has a Shore hardness between 60 and 80 Shore A.

8. The acoustic module (1) according to any one of the preceding claims, wherein said panel (100) is between 5 cm and 15 cm thick.

9. An acoustic antenna for receiving submarine waves for passive sonar, comprising a set of acoustic modules (1) according to any one of the preceding claims.

10. The acoustic antenna according to the preceding claim, said antenna being tubular.

11. The acoustic antenna according to the preceding claim, said antenna being truncated.

12. The acoustic antenna according to any one of claims 10 to 12, comprising a drum (12) and wherein said acoustic modules (1) are in abutment against said drum (12).

13. The acoustic antenna according to any one of claims 10 to 12, comprising a coaxial lower ring (101) and a coaxial upper ring (102), and wherein said acoustic modules (1) are attached to said lower (101) and upper (102) rings and are arranged so as to form, between said two rings (101, 102), a self-supporting, tubular-shaped drum, said panels extending along the length (L) between said lower ring (101) and said upper ring (102).

14. The acoustic antenna according to any one of claims 10 to 13, said antenna being cylindrical.

15. The acoustic antenna according to claim 14, wherein said acoustic modules (1) are arranged so that said columns (40) of hydrophones extend along respective generating lines of a single cylinder (18, 180).

16. The acoustic antenna according to claim 9, wherein said acoustic modules (1) are attached to the front part of the hull of a submarine.

17. The acoustic antenna according to claim 9, wherein said acoustic modules (1) plug a mouth (300) formed in the front part of the hull (302) of a submarine.

18. An acoustic antenna (200) for receiving submarine waves, **characterised in that** it comprises a succession of acoustic modules (1) according to any one of claims 1 to 8, mounted in abutment against a hull (201) of a submarine (202), said acoustic modules (1) being arranged so as to extend along their width substantially parallel to the axis (x) of said submarine (202).
